# EUROPEAN PATENT SPECIFICATION

(11) **EP 4 389 527 B1**
(45) Date of publication and mention of the grant of the patent: **16.09.2026**
(21) Application number: 22857584.1
(22) Date of filing: 02.08.2022
(51) Int. Cl.: B60R 11/02, B60R 7/04

(54) **VEHICLE INTERIOR COMPONENT AND VEHICLE COMPRISING VEHICLE INTERIOR COMPONENT**
FAHRZEUGINNENTEIL UND FAHRZEUG MIT FAHRZEUGINNENTEIL
COMPOSANT INTÉRIEUR DE VÉHICULE ET VÉHICULE COMPRENANT UN COMPOSANT INTÉRIEUR DE VÉHICULE

(30) Priority: 20.08.2021 CN 202110959245
(43) Date of publication of application: 26.06.2024
(73) Proprietor: Yanfeng International Automotive Technology Co., Ltd., Shanghai 201306 (CN)
(72) Inventor: ZHANG, Jixiang, Shanghai 201306 (CN); GU, Jing, Shanghai 201306 (CN); ZHOU, Lei, Shanghai 201306 (CN)
(74) Representative: Meissner Bolte Partnerschaft mbB
(86) International application number: PCT/CN2022/109653
(87) International publication number: WO 2023/020272

(56) References cited:
- CN-A- 103 557 416
- CN-A- 111 532 211
- CN-A- 113 525 243
- CN-U- 206 086 561
- CN-U- 206 606 134
- CN-U- 212 098 687
- CN-U- 213 442 346
- JP-A- 2001 328 797
- KR-B1- 100 598 619
- US-A1- 2009 039 743
- US-A1- 2011 134 522

## Description

### TECHNICAL FIELD

The present application relates generally to the field of vehicles, and more particularly to a vehicle interior component for use in a vehicle.

### BACKGROUND

As the vehicle industry develops, the use of vehicle interior components is increasing, and the requirements and demands of users for vehicle interior components are also increasing. Accordingly, there is much room for improvement in vehicle interior components.

In current vehicles, vehicle interior components are mostly fixed inside the vehicles for use by occupants in the vehicles. Typically, a vehicle interior component is provided with a cover plate to cover and expose an element inside the vehicle interior component for aesthetic and protective purposes.

Typically, opening and closing of the cover plate are independent of, i.e., separate from, operation of the element inside the vehicle interior component. The opening and closing of the cover plate may also be associated the element inside the vehicle interior component, but it is typically the action of the cover plate that triggers or causes the operation of the element inside the vehicle interior component.

From US 2011/134522 A1 a retractable screen device for a table is known, where the screen moves vertically and then tilts. A separate mechanism with a lid is provided to cover the opening in the table.

### SUMMARY

The present invention is defined by a vehicle interior component according to claim 1. Useful optional features are defined by the subclaims.

One of the objectives of the present application is to provide a vehicle interior component capable of overcoming at least one of the defects in the prior art.

One objective of the present application is to provide a vehicle interior component, wherein operation of an element inside the vehicle interior component triggers or causes opening and closing of a cover plate.

According to an aspect of the present application, a vehicle interior component is provided. The vehicle interior component comprises:
a base providing a compartment;
a cover plate configured to move between a closed position covering the compartment and an
open position exposing the compartment; and
a base plate arranged inside the compartment and capable of moving between a raised position and a lowered position;
wherein the cover plate moves from the closed position to the open position in response to the base plate moving from the lowered position to the raised position. Thus, operation of the base plate causes opening and closing of the cover plate.

In some embodiments of the vehicle interior component, the vehicle interior component comprises a mechanism configured to move the cover plate from the closed position to the open position in response to the base plate moving from the lowered position to the raised position.

In some embodiments of the vehicle interior component, the mechanism comprises a guide rod coupled to the cover plate, the guide rod being configured to be coupled with the base plate to push the cover plate into motion in response to the movement of the base plate.

In some embodiments of the vehicle interior component, the mechanism comprises a spring coupled to the guide rod, the spring being compressed when the base plate is in the lowered position.

In some embodiments of the vehicle interior component, the spring is released to push the guide rod into motion when the base plate moves from the lowered position to the raised position.

In some embodiments of the vehicle interior component, one end of the guide rod is provided with a rack, and the cover plate is provided with teeth, the cover plate being driven to move through engagement of the teeth with the rack when the guide rod moves.

In some embodiments of the vehicle interior component, the movement of the base plate between the lowered position and the raised position comprises a first stroke range in which the movement of the base plate drives movement of the cover plate, and a second stroke range in which the movement of the base plate is separated from the movement of the cover plate.

In some embodiments of the vehicle interior component, the vehicle interior component comprises a mechanism configured to move the cover plate from the closed position to the open position in response to the base plate moving from the lowered position to an intermediate position, and remains in the open position in response to the base plate moving from the intermediate position to the raised position.

In some embodiments of the vehicle interior component, the mechanism comprises a guide rod coupled to the cover plate, the guide rod being configured to: be coupled with the base plate to push the cover plate into motion in response to the movement of the base plate; and be separated from the base plate such that the cover plate remains stationary when the base plate moves.

In some embodiments of the vehicle interior component, the mechanism comprises a spring coupled to the guide rod, the spring being compressed when the base plate is in the lowered position.

In some embodiments of the vehicle interior component, the spring is released to push the guide rod into motion when the base plate moves from the lowered position to the intermediate position.

In some embodiments of the vehicle interior component, the spring is separated from the base plate when the base plate moves from the intermediate position to the raised position.

In some embodiments of the vehicle interior component, one end of the guide rod is provided with a rack, and the cover plate is provided with teeth, the cover plate being driven to move through engagement of the teeth with the rack when the guide rod moves.

In some embodiments of the vehicle interior component, one end of the spring is arranged on the base, the other end of the spring is coupled to the guide rod through a pressing plate, and the base plate acts on the spring through the pressing plate.

In some embodiments of the vehicle interior component, the cover plate comprises a first cover plate and a second cover plate that are disposed oppositely.

In some embodiments of the vehicle interior component, the first cover plate and the second cover plate move synchronously.

In some embodiments of the vehicle interior component, the cover plate is pivotably coupled to the base to move between the closed position and the open position with respect to the base.

In some embodiments of the vehicle interior component, the base plate is driven by a motor.

In some embodiments of the vehicle interior component, the vehicle interior component comprises a locking mechanism configured to lock the base plate to the base when the base plate is in the lowered position.

In some embodiments of the vehicle interior component, the vehicle interior component comprises a functional component coupled to the base plate, wherein the functional component is stored in the compartment when the base plate is in the lowered position; the functional component protrudes from the compartment when the base plate is in the raised position.

In some embodiments of the vehicle interior component, the functional component comprises a display screen and/or a vanity mirror.

According to another aspect of the present application, a vehicle is provided. The vehicle comprises the vehicle interior component as described above.

### BRIEF DESCRIPTION OF THE DRAWINGS

Various aspects of the present application will be better understood upon reading the following specific implementations with reference to the accompanying drawings. In the figures:
FIG. 1A is a simplified schematic diagram of a vehicle;
FIG. 1B is a cross-sectional view of a vehicle, which shows one embodiment of a vehicle interior component;

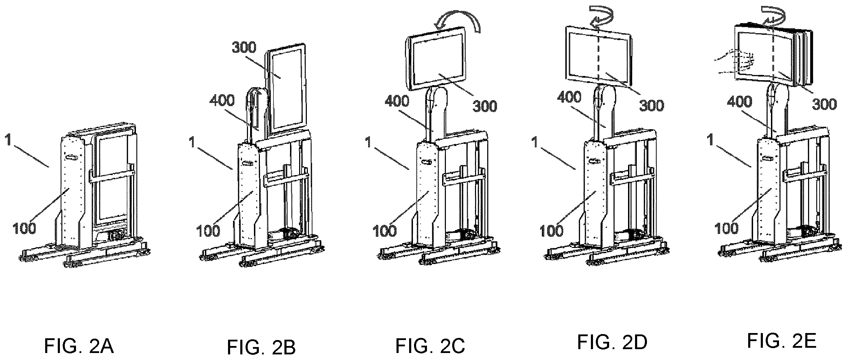

FIGs. 2A-2E are schematic diagrams of a process of operating a vehicle interior component according to some embodiments of the present application; among them, FIG. 2A shows the functional component in a storage position; FIG. 2B shows the functional component in an intermediate position; FIG. 2C shows the functional component in a service position; FIG. 2D shows the functional component deflected about an axis extending in a longitudinal direction in the service position; and FIG. 2E shows a user automatically controlling movement of the functional component by entering commands through a user interface on the functional component;
FIG. 3 is an exploded perspective view of a vehicle interior component according to some embodiments of the present application;
FIG. 4 is a partial schematic diagram of a vehicle interior component according to some embodiments of the present application, which shows a structure for performing raising and lowering operations;
FIG. 5A is a schematic diagram of a vehicle interior component in a storage position according to some embodiments of the present application;
FIG. 5B is an enlarged view of a portion B of a vehicle interior portion in FIG. 5A;
FIG. 5C is an enlarged view of a portion C of the vehicle interior portion in FIG. 5A;
FIG. 6A is a schematic diagram of a vehicle interior component in a service position according to some embodiments of the present application;
FIG. 6B is an enlarged view of a portion B of a vehicle interior portion in FIG. 6A;
FIG. 6C is an enlarged view of a portion C of the vehicle interior portion in FIG. 6A;
FIG. 7A is a perspective view of a portion of a mechanism of a vehicle interior component with a cover plate in a closed position according to some embodiments of the present application;
FIG. 7B is a perspective view of a portion of a mechanism of a vehicle interior component with a cover plate in an open position according to some embodiments of the present application;
FIG. 8A is a perspective view of a portion of a mechanism of a vehicle interior component with a functional component in an intermediate position according to some embodiments of the present application;
FIG. 8B is a perspective view of a portion of a mechanism of a vehicle interior component with a functional component in a service position according to some embodiments of the present application;
FIG. 9 is a perspective view of a rotating wheel of a mechanism of a vehicle interior component according to some embodiments of the present application;
FIG. 10A is a side cross-sectional view of a support arm of a vehicle interior component according to some embodiments of the present application;
FIG. 10B is another side cross-sectional view of a support arm of a vehicle interior component according to some embodiments of the present application;
FIG. 11A is an exploded perspective view of a functional component and a rotating wheel of a vehicle interior component according to some embodiments of the present application;
FIG. 11B is an assembly perspective view of a functional component and a rotating wheel of a vehicle interior component according to some embodiments of the present application;
FIG. 12A is a perspective view of a functional component and a rotating wheel of a vehicle interior component according to some embodiments of the present application, which shows a deflection limiting structure of the functional component;
FIG. 12B is an enlarged view of a portion B of the deflection limiting structure in FIG. 12A;
FIG. 13A is a perspective view of a functional component and a rotating wheel of a vehicle interior component according to some embodiments of the present application, which shows a deflection limiting structure of the functional component;
FIG. 13B is an enlarged view of a portion B of the deflection limiting structure in FIG. 13A;
FIGs. 14A and 14B are schematic diagrams of a portion of a mechanism of a vehicle interior component according to some other embodiments of the present application, which shows a locked state, with a cover plate in a closed position;
FIGs. 15A and 15B are schematic diagrams of a portion of a mechanism of a vehicle interior component according to some other embodiments of the present application, which shows unlocking from a locked state, with a cover plate in a closed position;
FIGs. 16A and 16B are schematic diagrams of a portion of a mechanism of a vehicle interior component according to some other embodiments of the present application, which shows an unlocked state, with a cover plate in an open position; and
FIGs. 17A and 17B are schematic diagrams of a portion of a mechanism of a vehicle interior component according to some other embodiments of the present application.

### DETAILED DESCRIPTION

The present application will be described below with reference to the accompanying drawings, which illustrate several embodiments of the present application. However, it should be understood that the present application may be embodied in many different forms and should not be construed as being limited to the embodiments described below. In fact, the embodiments described below are intended to provide a more complete disclosure of the present application and to fully explain the protection scope of the present application to those skilled in the art. It should also be understood that the embodiments disclosed herein can be combined in various manners to provide further additional embodiments.

It should be understood that in all drawings, identical reference numerals represent identical elements. In the drawings, dimensions of some features may be varied for clarity.

It should be understood that the terminology used in the specification is for the purpose of describing specific embodiments only, and is not intended to limit the present application. Unless otherwise defined, all terms (including technical terms and scientific terms) used herein have the meaning as commonly understood by those skilled in the art. Well-known functions or constructions may not be described in detail for brevity and/or clarity.

As used herein, the singular forms "a", "an" and "the" include plural referents unless the content clearly dictates otherwise. As used herein, the terms "comprise," "include", and "contain" specify the presence of stated features, but do not preclude the presence of one or more other features. As used herein, the term "and/or" includes any and all combinations of one or more of the associated listed items. As used herein, phrases "between X and Y" and "between about X and Y" should be interpreted to include X and Y. As used herein, the phrase "between about X and Y" means "between about X and about Y", and the phrase "from about X to Y" means "from about X to about Y".

In the specification, when an element is referred to as being "on", "attached" to, "connected" to, "coupled" to, or "in contact with" another element, etc., it may be directly on, attached to, connected to, coupled to, or in contact with the other element, or intervening elements may be present. In contrast, when an element is referred to as being "directly on", "directly attached" to, "directly connected" to, "directly coupled" to, or "in direct contact with" another element, there are no intervening elements present. In the specification, references to a feature that is disposed "adjacent" to another feature may have portions that overlap or are located above or below the adjacent feature.

In the specification, spatially relative terms such as "over", "below", "left", "right", "front", "rear", "upper", "lower" may be used to describe a relationship between one feature and another feature in the figures. It should be understood that the spatially relative terms are intended to encompass different orientations of a device in use or operation in addition to the orientations depicted in the figures. For example, if a device in the figures is inverted, features described as "below" other features should then be described as "above" the other features. The device may also be otherwise oriented (rotated by 90° or at other orientations), in which case the relative spatial relationship will be interpreted accordingly.

Specific embodiments of a vehicle interior component and a vehicle including the vehicle interior component according to the present application will be described in detail below with reference to the accompanying drawings.

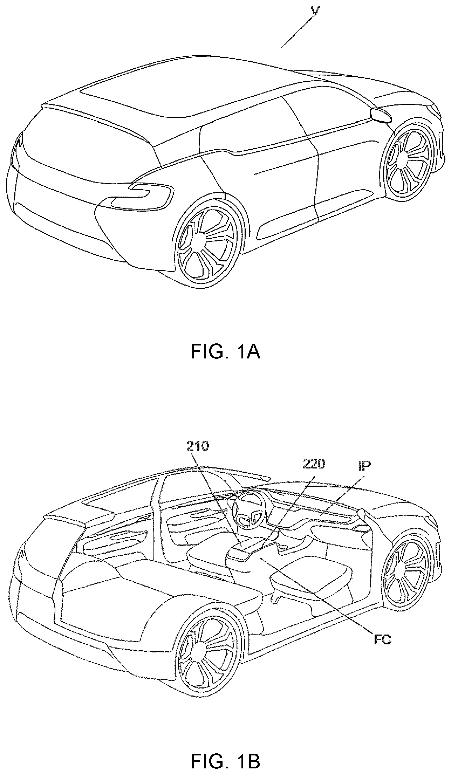

FIG. 1A shows an overall schematic diagram of a vehicle V, and FIG. 1B shows a cross-sectional view of the vehicle V to show the configuration of the interior of the vehicle V. Generally, the vehicle V comprises, for example, an instrument panel IP located in front of a driver and a front-seat passenger, a floor console FC (including an armrest box) arranged between the driver and the front-seat passenger, and the like.

The vehicle interior component 1 according to the present application is arranged inside the vehicle V, and may generally be arranged at any suitable position. For example, the vehicle interior component 1 may be embedded in the instrument panel IP, or may be mounted in the floor console FC. The vehicle interior component 1 may be a portion of the floor console FC, or may be formed integrally with the floor console FC. For convenience, in the following description, the floor console FC is used as an example to describe the arrangement of the vehicle interior component 1 in the vehicle V. However, it should be understood by those skilled in the art that the features of the embodiments described below are also applicable to embodiments in which the vehicle interior component 1 is mounted elsewhere in the vehicle.

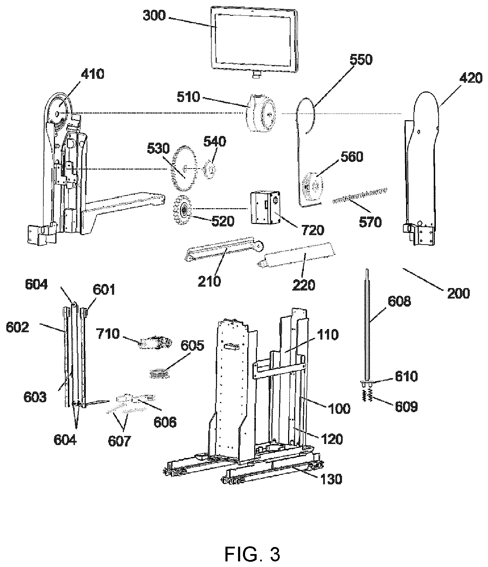

With reference to FIG. 3, the vehicle interior component 1 according to the present application comprises a base 100, a functional component 300, and a mechanism 200 configured to move the functional component 300 with respect to the base 100. The base 100 is arranged on a structure inside the vehicle V, for example, fixed to the interior of the floor console FC, or the base 100 itself may be a portion of the floor console FC. The functional component 300 is a component having a predetermined function for use by an occupant in the vehicle. For example, the functional component 300 may be a display screen, a vanity mirror, or the like. The mechanism 200 is configured to couple the base 100 with the functional component 300.

The base 100 is provided with a compartment 110 having a space sufficient to accommodate the functional component 300. According to some embodiments of the present application, the functional component 300 is configured to be movable between a storage position and a service position via an intermediate position. The mechanism 200 that couples the base 100 with the functional component 300 is configured to move the functional component 300 between the storage position and the intermediate position in a longitudinal direction with respect to the base 100, and rotate between the intermediate position and the service position about an axis extending in a transverse direction. FIGs. 2A-2E show a process of operating a vehicle interior component 1 according to some embodiments of the present application.

The above longitudinal direction corresponds to a moving direction of the functional component 300 from the storage position to the intermediate position, as shown in FIGs. 2D-2E, the longitudinal direction is substantially the direction shown by the dotted line. The transverse direction is a direction perpendicular to the longitudinal direction. For example, in an embodiment in which the vehicle interior component 1 is mounted in the floor console FC, the longitudinal direction may be substantially a vertical direction, and the transverse direction may be substantially a direction along the width of the vehicle, i.e., a direction from the driver side to the front-seat passenger side.

FIG. 2A shows a functional component 300 in a storage position at which the functional component 300 may be accommodated in the compartment 110 of the base 100. In this case, the vehicle interior component 1 is in a folded state, presenting a compact and aesthetically pleasing structure, and the functional component 300 is in the compartment 110 and thus is protected. In one embodiment, when the functional component 300 is in the storage position, the functional component 300 is placed vertically so as to be easily accommodated in the compartment 110, thereby saving the space.

FIG. 2B shows the functional component 300 in an intermediate position, where the functional component 300 moves in the longitudinal direction (i.e., raised in the longitudinal direction or the vertical direction) with respect to the base 100 via the mechanism 200. In the illustrated embodiments, when the functional component 300 is in the intermediate position, the functional component 300 protrudes from the compartment 110 of the base 100 to be exposed outside the base 100. In one embodiment, the functional component 300 remains vertically placed when the functional component 300 moves from the storage position to the intermediate position.

FIG. 2C shows the functional component 300 in a service position, where the functional component 300 rotates, via the mechanism 200, from the intermediate position to the service position along an axis extending in the transverse direction. During the movement from the intermediate position to the service position, the functional component 300 is further unfolded so as to be in a position suitable for use by a user. In one embodiment, the functional component 300 changes from the vertical placement to the transverse placement when the functional component 300 moves from the intermediate position to the service position.

In order to make the functional component 300 better available to the user with the functional component 300 in the service position, the functional component 300 may be deflected to acquire different orientations and positions. For example, FIG. 2D shows a position at which the functional component 300 is located after being deflected by substantially 90° from the position shown in FIG. 2C about an axis extending in the longitudinal direction. The deflection of the functional component 300 may enable the functional component 300 to face occupants at different seats in the vehicle. For example, the functional component 300 may be deflected to face a driver or a front-seat passenger, or may be deflected to face substantially a rear-seat passenger for use by the respective occupant. In the case where the functional component is a display screen, the functional component may be arranged, for example, in the form of a touch screen, such that an occupant in the vehicle may automatically control the movement of the functional component 300 by entering a command through a user interface on the display screen, as shown in FIG. 2E.

In some embodiments of the present application, the base 100 may include a frame 120 and guide rails 130, as shown in FIG. 3. The frame 120 is configured for providing the compartment 110, and is slidably arranged on the guide rails 130. In this way, when the vehicle interior component 1 is mounted in the vehicle through the guide rails 130, the frame 120 may slide on the guide rails 130, thereby sliding with the functional component 300 correspondingly to acquire a better orientation and position for use. For example, the guide rails 130 may be mounted between the driver side and the front-seat passenger side in a front-rear direction of the vehicle and extend to the rear seat. Thus, the functional component 300 may not only be located between the driver and the front-seat passenger when in use for ease of use by the driver and the front-seat passenger, but may also slide in the vicinity of a rear-seat passenger via the guide rails 130 for more favorable for the rear-seat passenger to use.

FIG. 3 shows an exploded perspective view of a vehicle interior component 1 according to some embodiments of the present application. A mechanism 200 of the vehicle interior component 1 is described in detail below with reference to FIG. 3 and a partial view of portions of the vehicle interior component 1.

The mechanism 200 comprises a support arm 400 capable of moving in a longitudinal direction with respect to the base 100, and a functional component 300 is arranged at one end of the support arm 400, such that the functional component 300 may be raised or lowered with the movement of the support arm 400. In another aspect, the functional component 300 can also rotate, at the end of the support arm 400, with respect to the support arm 400 about an axis extending in the transverse direction.

In the illustrated embodiments, the support arm 400 may be composed of a first support arm 410 and a second support arm 420, wherein the first support arm 410 and the second support arm 420 may be coupled to each other by various manners such as snap fit, and screw or pin coupling. In further embodiments, the first support arm 410 and the second support arm 420 may be configured to form a cavity after being coupled to each other, and some elements of the mechanism 200 may be placed in the cavity to acquire a compact and aesthetically pleasing configuration.

The mechanism 200 further comprises cables 603 coupled to the support arm 400, wherein the cables 603 are arranged in the form of a closed loop, such that the support arm 400 is driven to be raised or lowered with the movement of the cables 603 in a forward or reverse direction.

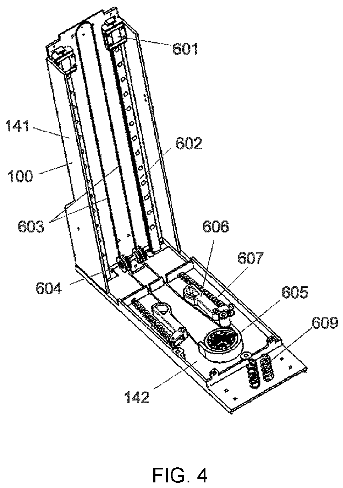

As shown in FIG. 4, in one embodiment, the cables 603 are in the form of a closed loop that may extend along a side wall 141 and a bottom wall 142 of the base 100. A pulley 604 may be arranged at an upper portion of the side wall 141, a winder 605 may be arranged on the bottom wall 142, pulleys 604 for changing an extending direction of the cables 603 from a vertical direction along the side wall 141 to a horizontal direction along the bottom wall 142 may be arranged at a junction of the side wall 141 and the bottom wall 142, and the cables 603 may extend around the pulleys 604 and the winder 605 to form a closed loop.

The winder 605 may be driven to rotate by a motor 710, and rotation of the winder 605 in both directions drives the cables 603 to move in a forward or reverse direction. Further, a tensioning device including a tensioning rod 606 and a spring 607 may be arranged. In the illustrated embodiments, the tensioning rod 606 and the spring 607 are arranged on the bottom wall 142, the spring 607 is coupled to the tensioning rod 606 and is configured to press the tensioning rod 606 against the cables 603 to pre-tension the cables 603. According to some embodiments, a single tensioning device may be included. According to some other embodiments, a plurality of tensioning devices may be included, such as a pair of tensioning devices as shown in FIG. 4, which are arranged oppositely with respect to the cables 603.

It should be understood by those skilled in the art that the tensioning devices described above are merely exemplary and may take any suitable arrangement. For example, the two tensioning devices may be arranged on the side wall 141 instead of the bottom wall 142, or one tensioning device is arranged on the side wall 141 and the other tensioning device is arranged on the bottom wall 142.

It should be understood by those skilled in the art that the cables 603 described above are merely exemplary and may take any suitable arrangement. For example, the cables 603 may extend only along the side wall 141 and not along the bottom wall 142. Correspondingly, the above-mentioned elements related to the cables 603 may all be arranged on the side wall 141.

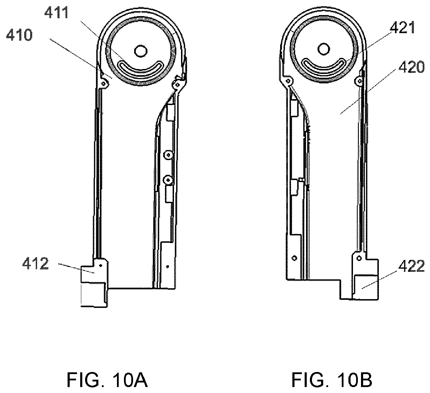

In some embodiments according to the present application, the cables 603 are fixedly coupled to pin holes (shown in FIGs. 10A-10B) of the support arm 400 through a pin shaft (not shown). Specifically, the support arm 400 is fixed to the cables 603 on a portion of the cables 603 extending along the side wall 141. Thus, the movement of the cables 603 in the forward or reverse direction drives the support arm 400 to be raised or lowered.

In the illustrated embodiments, the first support arm 410 may be provided with a pin hole 412, the second support arm 420 may be provided with a pin hole 422, and when the first support arm 410 and the second support arm 420 are engaged with each other, the pin hole 412 and the pin hole 422 may be adjacent to each other. Preferably, the pin hole 412 and the pin hole 422 are located at a lower portion of the support arm 400.

In the case where the pin hole 412 and the pin hole 422 are arranged, in order to avoid interference, the cable 603 may be fixedly coupled to one of the pin hole 412 and the pin hole 422 through a pin shaft, while the cable 603 is allowed to move automatically through the other of the pin hole 412 and the pin hole 422, such that the cables 603 drive the support arm 400 to be raised or lowered.

The mechanism 200 of the vehicle interior component 1 according to the present application may further include sliding rails 602 and sliders 601 capable of sliding along the sliding rails 602. In the illustrated embodiments, as shown in FIG. 4, the sliding rails 602 are arranged on the side wall 141 of the base 100, and extend in a roughly longitudinal direction. The sliders 601 may be fixed to the support arm 400, and when the support arm 400 is pulled by the cables 603 to be raised or lowered, the support arm 400 moves along the sliding rails 602 via the sliders 601. Thus, the sliders 601 and the sliding rails 602 guide the support arm 400 to move in the longitudinal direction.

In the illustrated embodiments, a pair of sliding rails 602 and a corresponding pair of sliders 601 may be included, and the two sliders 601 are fixed correspondingly to the first support arm 410 and the second support arm 420. Preferably, the sliders 601 are fixed to the support arm 400 at the lower portion of the support arm 400.

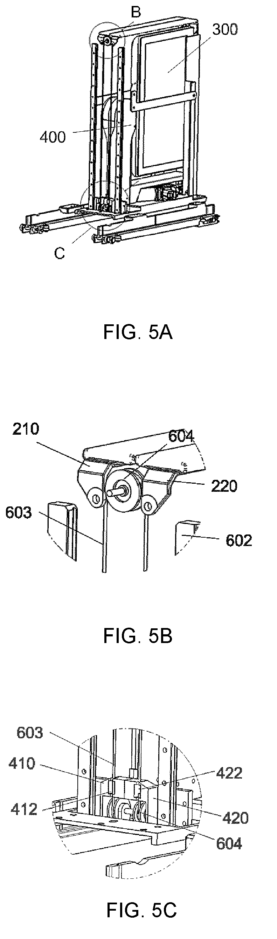

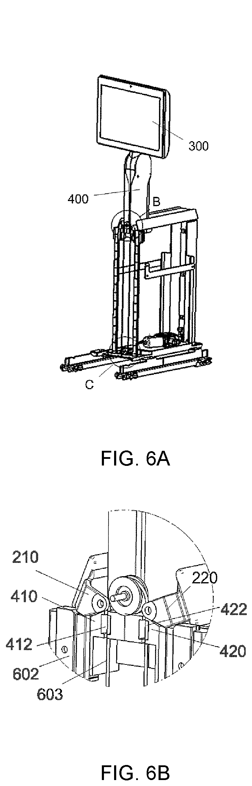

As shown in FIG. 5A, the support arm 400 is in a lowered position, and the functional component 300 is stored in the compartment 110 of the base 100. In this case, the pin hole 412 and the pin hole 422 are lowered to a lower portion of the side wall 141 by movement of the cables 603. Correspondingly, the lower portion of the support arm 400 is lowered to the lower portion of the side wall 141, as shown in FIG. 5C.

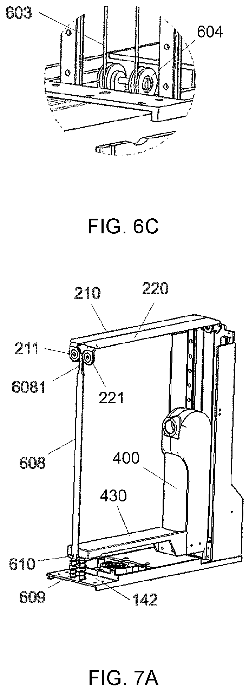

As shown in FIG. 6A, the support arm 400 is in a raised position, and the functional component 300 protrudes from the compartment 110 of the base 100. In this case, the pin hole 412 and the pin hole 422 are raised to the upper portion of the side wall 141 by movement of the cables 603. Correspondingly, the lower portion of the support arm 400 is raised to the upper portion of the side wall 141, as shown in FIG. 6B.

The vehicle interior component 1 according to the present application may further include a cover plate, wherein the cover plate may be configured to move between a closed position for covering the compartment 110 and an open position for exposing the compartment 110. When the functional component 300 is in the storage position, the cover plate may be in the closed position to cover the compartment 110 and thus cover the functional component 300, and when the functional component 300 is in the intermediate position or the service position, the cover plate is in the open position to facilitate the functional component 300 to protrude from the compartment 110.

The cover plate may move between the closed position and the open position in any suitable manner, for example, by sliding or rotating. The cover plate may be a single component or may be composed of a plurality of components. In an embodiment in which the vehicle interior component 1 is mounted in the floor console FC, the cover plate may even be the cover plate of the armrest box itself, as shown in FIG. 1B.

In some embodiments according to the present application, the cover plate may include a first cover plate 210 and a second cover plate 220 that are disposed oppositely. The first cover plate 210 and the second cover plate 220 are each pivotably coupled to the base 100 to move between a closed position and an open position in a pivoting manner. Preferably, the first cover plate 210 and the second cover plate 220 may move synchronously.

The cover plate may be manually opened by a user or automatically opened by an actuator. The cover plate may be opened and closed separately from the movement of the mechanism 200 and the functional component 300, or may be opened and closed synchronously with the movement of the mechanism 200 and the functional component 300.

In some embodiments according to the present application, the cover plate may move from the closed position to the open position in response to the functional component 300 moving from the storage position to the intermediate position. That is, when the motor 710 pulls the cables 603 through the winder 605 to drive the support arm 400 and the functional component 300 to be raised, the cover plate moves from the closed position to the open position in response to the raising movement of the support arm 400 and the functional component 300. Furthermore, when the motor 710 pulls the cables 603 through the winder 605 to drive the support arm 400 and the functional component 300 to be lowered, the cover plate may move from the open position to the closed position in response to a part of lowering movement (e.g., the second half of the lowering movement) of the support arm 400 and the functional component 300.

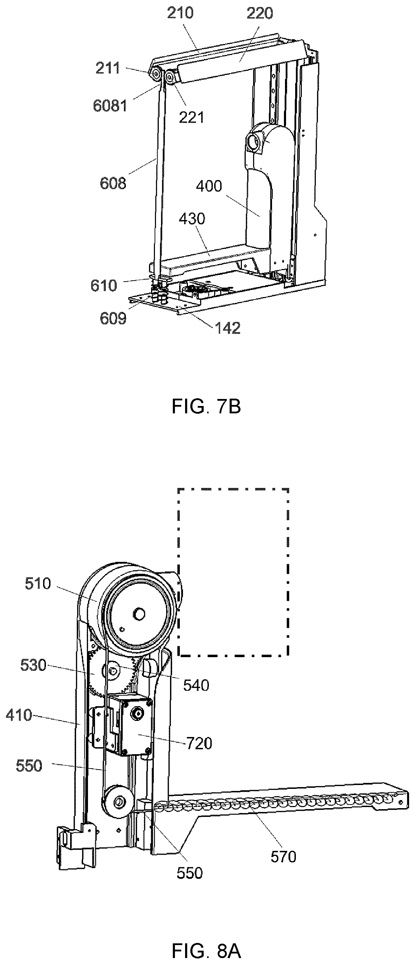

As shown in FIGs. 7A and 7B, the mechanism 200 may include a guide rod 608, wherein the guide rod 608 may extend substantially in a longitudinal direction (but is not limited thereto), and both ends of the guide rod 608 are coupled to the cover plate and the base, respectively. In the illustrated embodiments, one end of the guide rod 608 is coupled to the first cover plate 210 and the second cover plate 220, so as to drive the first cover plate 210 and the second cover plate 220 to pivot to move between the closed position and the open position, and the other end of the guide rod 608 is coupled to the bottom wall 142 of the base 100.

According to some embodiments of the present application, the guide rod 608 is configured to move between a high position (as shown in FIG. 7A) and a low position (as shown in FIG. 7B). When the functional component 300 moves from the storage position to the intermediate position, the guide rod moves from the low position to the high position. At the low position, the guide rod 608 causes the first cover plate 210 and the second cover plate 220 to be in the closed position, as shown in FIG. 7A, and at the high position, the guide rod 608 causes the first cover plate 210 and the second cover plate 220 to be in the open position, as shown in FIG. 7B. Specifically, in one embodiment, one end of the guide rod 608 is provided with a rack 6081, or one end of the guide rod 608 itself is in the form of a rack. Correspondingly, the cover plate is provided with teeth, wherein the teeth on the cover plate are engaged with the rack 6081, and when the guide rod 608 moves, the cover plate is driven to move through engagement of the teeth with the rack 6081.

In the illustrated embodiments, the rack 6081 is formed on both sides of one end of the guide rod 608, and the teeth of the rack 6081 on both sides are engaged with teeth 211 on the first cover plate 210 and teeth 221 on the second cover plate 220, respectively. When the guide rod 608 moves, the first cover plate 210 and the second cover plate 220 are synchronously driven to pivot through the engagement of the teeth 211 and 221 with the rack 6081.

The mechanism 200 further comprises a spring 609 coupled to the guide rod 608, and the spring 609 is compressed when the guide rod 608 is in the low position. Specifically, in some embodiments, as shown in FIGs. 7A and 7B, one end of the spring 609 is coupled to the other end, opposite to the rack 6081, of the guide rod 608, and the other end of the spring 609 is fixed to, for example, the bottom wall 142 of the base 100. The guide rod 608 may be pushed by an elastic force of the spring 609.

The support arm 400 may include a base plate 430 in the compartment 110, and the base plate 430 may be arranged on either the first support arm 410 or the second support arm 420.

The motor 710 may function as a locking mechanism. When the functional component 300 is in the storage position, the base plate 430 is in the lowered position and the spring 609 is thus compressed. In this case, because the motor 710 is not operated, a locking effect is formed by mutual restraint with the winder 605, the cables 603 and the support arm 400, such that the base plate 430 is locked to the base 100 while remaining stationary, the spring 609 is kept and locked in a compressed state, the guide rod 608 is in the low position, and the cover plate is in the closed position.

The base plate 430 may be coupled with the guide rod 608, such that the guide rod 608 can push the cover plate to move in response to the movement of the base plate 430. When the functional component 300 moves from the storage position to the intermediate position, the base plate 430 moves from the lowered position to the raised position, and the spring 609 is released to push the guide rod 608 to move from the low position to the high position. When the guide rod 608 moves to the high position, the base plate 430 may be disengaged from the spring 609. In this case, the spring 609 is in a free state, and thus the guide rod 608 also stops moving, thereby keeping the cover plate in the open position.

In the illustrated embodiments, the base plate 430 protrudes substantially horizontally from the support arm 400, and a pressing plate 610 may be arranged between the guide rod 608 and the spring 609, i.e., the guide rod 608 is coupled to the spring 609 through the pressing plate 610. The pressing plate 610 facilitates the base plate 430 to apply a compressive force on the spring 609.

The base plate 430 may move between the lowered position and the raised position via the intermediate position, i.e., the movement of the base plate 430 between the lowered position and the raised position may include a first stroke range and a second stroke range, the movement of the base plate 430 between the lowered position and the intermediate position is the first stroke range, and the movement of the base plate 430 between the intermediate position and the raised position is the second stroke range.

Within the first stroke range, the movement of the base plate 430 causes the guide rod 608 to move, driving the cover plate to move. Within the second stroke range, the movement of the base plate 430 is separated from the movement of the guide rod 608 and the cover plate. For example, when the base plate 430 moves, both the guide rod 608 and the cover plate remain stationary. The cover plate may move from the closed position to the open position in response to the base plate 430 moving from the lowered position to the intermediate position. When the functional component 300 is in the storage position, the base plate 430 is in the lowered position, and the base plate 430 abuts against the pressing plate 610 and is thus coupled with the guide rod 608. A downward force is applied to the pressing plate 610, the spring 609 is then in a compressed state, the guide rod 608 is in the low position, and the first cover plate 210 and the second cover plate 220 are in the closed position. As the functional component 300 moves from the storage position to the intermediate position, i.e., when the motor 710 drives the support arm 400 to be raised via the cables 603, the base plate 430 is raised with the support arm 400 and moves from the lowered position to the intermediate position, gradually releasing the spring 609. Under the elastic force of the spring 609, the guide rod 608 is pushed to move towards the high position, and then the first cover plate 210 and the second cover plate 220 are driven to pivot. As the support arm 400 and the base plate 430 are raised, the spring 609 gradually returns from the compressed state to the free state, when the base plate 430 moves to the intermediate position, the spring 609 is in the free state, the guide rod 608 is no longer pushed by the spring 609 and stops moving. In this case, the guide rod 608 is at the high position, and the first cover plate 210 and the second cover plate 220 are in the open position.

Thereafter, the cover plate may remain in the open position in response to the base plate 430 moving from the intermediate position to the raised position. As the support arm 400 and the base plate 430 are further raised, the base plate 430 moves from the intermediate position to the raised position, the base plate 430 is separated from the pressing plate 610 and the spring 609, and is thus disengaged from the guide rod 608 and no longer acts on the guide rod 608, the guide rod 608 remains in the high position, and the first cover plate 210 and the second cover plate 220 remain in the open position. With the cover plate already in the open position, the functional component 300 can protrude from the compartment 110 to the outside of the base 100 as the support arm 400 is further raised.

When the functional component 300 moves from the service position and the intermediate position towards the storage position, the motor 710 drives the support arm 400 to be lowered via the cables 603. When the support arm 400 is lowered until the functional component 300 is fully accommodated in the compartment 110 of the base 100, the base plate 430 is in contact with the pressing plate 610 and the spring 609 as the support arm 400 continues to be lowered. When the support arm 400 and the base plate 430 continue to be lowered, the base plate 430 abuts against the pressing plate 610, so that a downward force is applied to the pressing plate 610, and the spring 609 then transitions from a free state to a compressed state, and drives the guide rod 608 to move from the high position to the low position, thereby driving the cover plates (i.e., the first cover plate 210 and the second cover plate 220) to move from the open position to the closed position. When the functional component 300 is finally in the storage position, the base plate 430 is in the lowered position, and the guide rod 608 moves to the low position, such that the cover plates (i.e., the first cover plate 210 and the second cover plate 220) finally move to the closed position for covering the compartment 110.

In some other embodiments according to the present application, in the case where the motor 710 does not function as a locking mechanism, a mechanical locking mechanism may be arranged so as to achieve the movement of the base plate 430 among the lowered position, the intermediate position and the raised position.

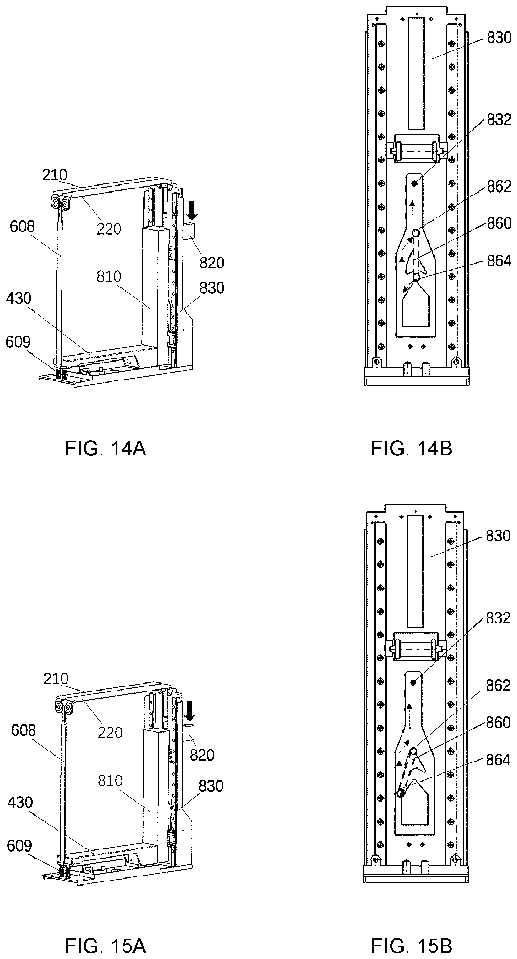

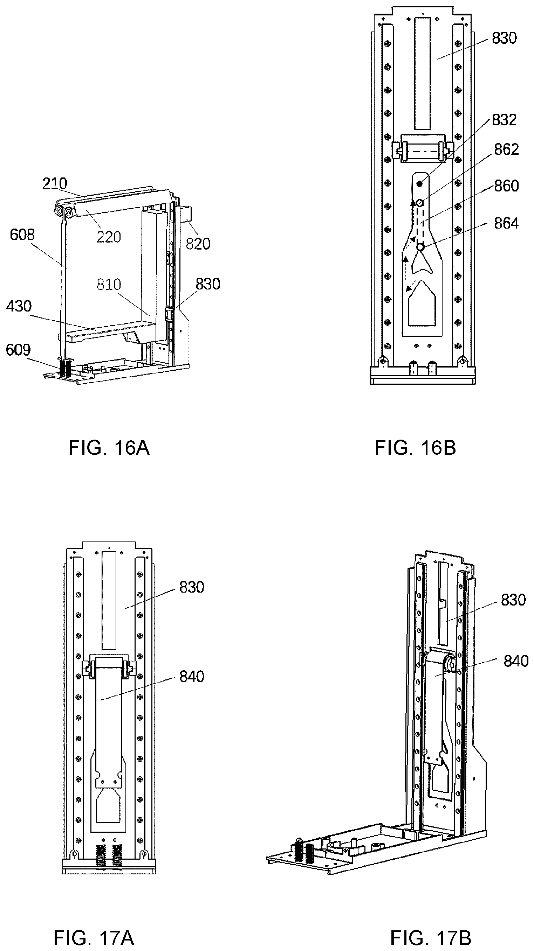

As shown in FIGs. 14A-17B, the base plate 430 is fixed to a lifting arm 810, and a maneuvering portion 820 is arranged on the lifting arm 810. The lifting arm 810 is coupled to a support wall 830 through a coil spring 840. As shown in FIGs. 17A and 17B, one end of the coil spring 840 is fixed to the support wall 830 through a pin shaft, and the other end is fixed to the lifting arm 810 through a fastening screw, and the lifting arm 810 can move with respect to the support wall 830 by rolling of the coil spring 840. When the base plate 430 is in the lowered position and the intermediate position, the coil spring 840 is in a stretched state, and when the base plate 430 is in the raised position, the coil spring 840 is in a free state.

A labyrinth locking slot 832 is arranged on the support wall 830, as shown in FIGs. 14B, 15B and 16B. A coupling rod 860 is provided with a first end 862 and a second end 864, the first end 862 is coupled to the lifting arm 810 through a pin shaft, and a pin shaft of the second end 864 is inserted in the labyrinth locking slot 832 and can move in the labyrinth locking slot 832.

As shown in FIGs. 14A and 14B, it is illustrated that the mechanism is in a locked state, in which the second end 864 of the coupling rod 860 is constrained by the labyrinth locking slot 832, for example, constrained by a center stopper in the labyrinth locking slot 832, such that the coupling rod 860 remains stationary. Thus, the lifting arm 810 coupled to the first end 862 of the coupling rod 860 remains stationary, and then the base plate 430 fixed to the lifting arm 810 remains stationary. In this case, the base plate 430 is locked to the base 100 in the lowered position, and thus the spring 609 is compressed, such that the cover plates (i.e., the first cover plate 210 and the second cover plate 220) are in the closed position by means of the guide rod 608.

As shown in FIGs. 15A and 15B, when it is expected to unlock such that the base plate 430 can move from the lowered position to the intermediate position, the maneuvering portion 820 may be pressed downward to allow the lifting arm 810 to move slightly downward. Correspondingly, the movement of the lifting arm 810 drives the coupling rod 860 to move, such that the first end 862 moves downward, while the second end 864 moves along the labyrinth locking slot 832, i.e., move laterally downwards along the dotted arrow shown in FIG. 15B, to a position that bypasses the center stopper. In this case, by releasing the maneuvering portion 820, the second end 864 can bypass the center stopper and move upward along the dotted arrow under an elastic force of the coil spring 840. Thus, the lifting arm 810 is pulled by the coil spring 840 and moves upward, so that the base plate 430 can move from the lowered position to the intermediate position. Then, the base plate 430 gradually releases the spring 609, such that the spring 609 can transition from a compressed state to a free state, during which the guide rod 608 is pushed to move from the low position to the high position under an elastic action of the spring 609 to actuate the cover plate, so that the cover plate moves from the closed position to the open position.

The lifting arm 810 and the base plate 430 continue to move upward under an elastic action of the coil spring 840 until the base plate 430 reaches the intermediate position. Thereafter, the base plate 430 is separated from the spring 609, such that the base plate 430 is no longer coupled with the guide rod 608. In this case, the spring 609 is in the free state, the guide rod 608 is in the high position, and the cover plate is in the open position.

Thereafter, the lifting arm 810 and the base plate 430 continue to move upwardly under the elastic action of the coil spring 840, such that the base plate 430 moves from the intermediate position to the raised position. In this case, the base plate 430 remains separated from the spring 609, the spring 609 remains in a free state, the guide rod 608 remains in the high position, and the cover plate remains in the open position, as shown in FIGs. 16A and 16B.

The operating process may be reversed when the base plate 430 is expected to move from the raised position to the lowered position to allow the cover plate to move from the open position to the closed position. First, the maneuvering portion 820 is pressed, such that the lifting arm 810 moves downward to drive the base plate 430 to move from the raised position to the intermediate position, and the second end 864 of the coupling rod 860 moves downward in a direction opposite to the dotted arrow. When the base plate 430 moves to the intermediate position, the base plate 430 is in contact with the spring 609 and is coupled with the guide rod 608. As the base plate 430 continues to move from the intermediate position towards the lowered position, the base plate 430 compresses the spring 609, thereby driving the guide rod 608 to move from the high position to the low position, such that the cover plate moves from the open position to the closed position. When moving to a state shown in FIGs. 15A and 15B, the cover plate moves to the closed position. In this case, the maneuvering portion 820 may be released, so that the lifting arm 810 starts to be raised under the elastic action of the coil spring 840, and the second end 864 of the coupling rod 860 moves to a position (i.e., a position shown in FIG. 14B) blocked by the center stopper. In this case, the second end 864 of the coupling rod 860 is constrained by the center stopper, such that the coupling rod 860 remains stationary, thus the lifting arm 810 coupled to the first end 862 of the coupling rod 860 remains stationary, and the base plate 430 fixed to the lifting arm 810 remains stationary. In this case, the base plate 430 is locked to the base 100 in the lowered position, and thus the spring 609 is compressed, such that the cover plates (i.e., the first cover plate 210 and the second cover plate 220) are in the closed position by means of the guide rod 608.

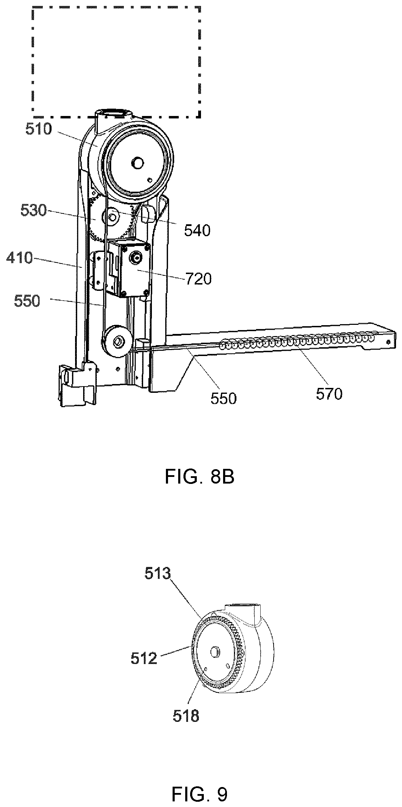

According to some embodiments of the present application, the mechanism 200 may include a rotating wheel 510, and the rotating wheel 510 is configured to be rotatable with respect to the support arm 400 about an axis extending in the transverse direction. The functional component 300 may be arranged on the rotating wheel 510, so that the functional component 300 moves between the intermediate position and the service position as the rotating wheel 510 rotates. For example, in the illustrated embodiments, as shown in FIG. 8A, when the functional component 300 is in the intermediate position, the motor 710 drives the support arm 400 via the cables 603 to be raised to a highest position, but the functional component 300 is still in a vertically arranged orientation. The rotation of the rotating wheel 510 drives the functional component 300 to rotate from the vertically arranged orientation to a transversely arranged orientation, such that the functional component 300 moves from the intermediate position to the service position, as shown in FIG. 8B.

In the illustrated embodiments, the rotating wheel 510 may be arranged in a cavity formed by the first support arm 410 and the second support arm 420. However, it will be understood by those skilled in the art that the rotating wheel 510 may also be arranged at any other suitable position. Preferably, the rotating wheel 510 is arranged at an end of the support arm 400, i.e., an upper end of the support arm 400. The rotating wheel 510 may be rotatably fixed to the support arm 400, for example, the rotating wheel 510 may be fixed to the support arm 400 through a shaft fixed to the first support arm 410 and the second support arm 420, respectively, and the rotating wheel 510 may rotate about the shaft.

**In** some embodiments, the rotating wheel 510 may be driven by a motor 720 to rotate. The motor 720 may drive the rotating wheel 510 directly, or the rotating wheel 510 may be driven by a transmission mechanism. As shown in FIGs. 8A and 8B, the mechanism 200 may be provided with a gear 530 driven by the motor 720, teeth 512 (as shown in FIG. 9) are arranged on one side of the rotating wheel 510, and the teeth 512 are engaged with the gear 530, and thus the motor 720 can drive the rotating wheel 510 to rotate with respect to the support arm 400. As shown in FIG. 3, a gear 520 may also be arranged, and the gear 520 is engaged with the gear 530. The motor 720 drives the gear 520 to rotate, and the gear 520 drives [AD1]the gear 530 to rotate, and then drives the rotating wheel 510 to rotate.

The motor 720 and the gear 530 may be arranged in the cavity formed by the first support arm 410 and the second support arm 420. Further, the motor 720 and the gear 530 may be arranged on the first support arm 410 and/or the second support arm 420. For example, in the embodiments shown in FIGs. 8A and 8B, the motor 720 and the gear 530 are both arranged on the first support arm 410. The gear 530 is fixed to the first support arm 410 through a pin shaft 540, and the motor 720 may be directly fixed to the first support arm 410.

The motor 720 may be configured to not operate during the movement of the functional component 300 from the storage position to the intermediate position, i.e., the motor 720 does not drive the rotating wheel 510 to rotate, but can drive the rotating wheel 510 to rotate with respect to the support arm 400 only when the functional component 300 reaches the intermediate position. After the functional component 300 moves from the service position to the intermediate position, the motor 720 is no longer operated, so that the functional component 300 can continue to move from the intermediate position to the storage position.

In some embodiments, as shown in FIG. 9, the rotating wheel 510 may be provided with a pin 518 and the support arm 400 may be correspondingly provided with a slot. For example, the first support arm 410 is provided with a slot 411 and the second support arm 420 is provided with a slot 421, as shown in FIGs. 10A and 10B. The pin 518 on the rotating wheel 510 may fit into the slot 411 on the first support arm 410 and the slot 421 on the second support arm 420, respectively. The slot 411 and the slot 421 may guide the movement of the pin 518 to prevent deviation in the rotation of the rotating wheel 510. Both ends of the slot 411 and the slot 421 may also function as stop members to limit a range of movement of the pin 518, and then limit rotation of the rotating wheel 510 with respect to the support arm 400. Thus, the rotating wheel 510 may be designed to merely allow the functional component 300 to rotate between the intermediate position and the service position without exceeding the range between the two positions.

Spring coils 513 may also be arranged on both sides of the rotating wheel 510, and when the rotating wheel 510 is mounted on the support arm 400, the spring coils 513 may abut against the first support arm 410 and the second support arm 420, respectively, for reducing friction between the rotating wheel 510 and the support arm 400, and reducing noise. It will be understood by those skilled in the art that the spring coils 513 may be replaced with any suitable elements and/or materials known in the art that are capable of reducing friction and noise between two components.

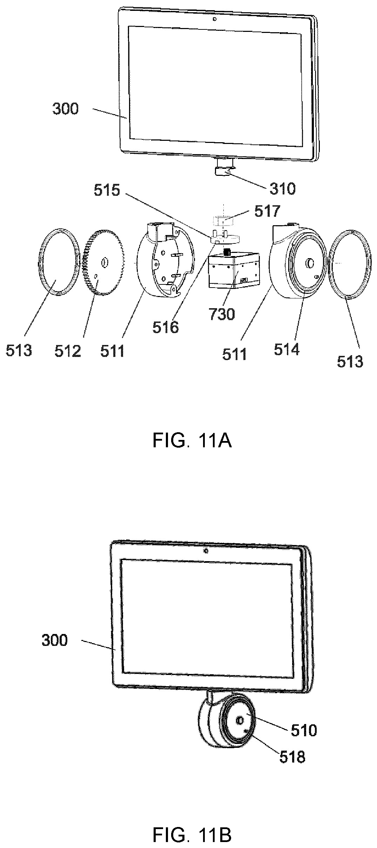

In some embodiments, the rotating wheel 510 may be provided with a pull wire 550. For example, as shown in FIGs. 8A and 8B, one end of the pull wire 550 may be wrapped around the other side, opposite to the teeth 512, of the rotating wheel 510. In one embodiment, a clamp 514 (as shown in FIG. 11A) may be arranged on the other side, and the pull wire 550 may be fixed to the rotating wheel 510 by the clamp 514. The other end of the pull wire 550 may be coupled to a spring 570. When the functional component 300 is in the storage position and the intermediate position, the spring 570 is in a stretched state, and when the functional component 300 moves from the intermediate position to the service position, a tensile force applied to the pull wire 550 by the spring 570 may assist the rotating wheel 510 to rotate with respect to the support arm 400. That is, when the functional component 300 moves from the intermediate position to the service position, the motor 720 drives the rotating wheel 510 to rotate, the spring 570 and the pull wire 550 also pull the rotating wheel 510 to rotate, and the rotating wheel 510 rotates under a combined action of the motor 720, the spring 570 and the pull wire 550, thus a power required for the motor 720 to overcome dead weight of the functional component 300 to drive the functional component 300 to rotate is reduced, so that a motor with a low power can also meet requirements, thereby reducing the cost of the motor, and prolonging the service life of the motor.

One end of the spring 570 is coupled to the pull wire 550, and the other end may be coupled to the support arm 400. As shown in FIGs. 8A and 8B, the spring 570 is arranged in the base plate 430 of the support arm 400, and the pull wire 550 is coupled to the spring 570 by sliding and changing an extending direction. Such an arrangement makes full use of an existing structure of the support arm 400, and saves space.

In some embodiments, the mechanism 200 may also be configured to deflect the functional component 300, when in the service position with respect to the support arm 400 about an axis extending in the longitudinal direction. In the case where the rotating wheel 510 is arranged, the functional component 300 can be deflected with respect to the rotating wheel 510 about an axis extending in the longitudinal direction.

In some embodiments, the mechanism 200 may be provided with a rotating shaft 515 extending in a longitudinal direction, and the rotating shaft 515 is coupled to the functional component 300 to drive the functional component 300 to deflect. The rotating shaft 515 may be driven by a motor 730. For example, a shaft hole coupled to an output shaft of the motor 730 may be arranged at an intermediate position of the rotating shaft 515, such that the motor 730 can drive the rotating shaft 515 to rotate. The functional component 300 may be provided with a support base 310, and the rotating shaft 515 may be coupled to the support base 310, thus the motor 730 drives the rotating shaft 515 to rotate, and the rotating shaft 515 drives the support base 310 to rotate, so as to allow the functional component 300 to be deflected.

As shown in FIGs. 11A and 11B, in some embodiments, the rotating shaft 515 may be arranged in the rotating wheel 510. As shown in FIG. 11A, the rotating wheel 510 comprises two wheel enclosures 511, and the two wheel enclosures 511 can be coupled to each other by various means such as snap fit, screw or pin coupling, and the like. The rotating shaft 515 and the motor 730 can then be arranged within a cavity formed by the two wheel enclosures 511. The teeth 512, the clamp 514, and the spring coils 513 may be arranged on the two wheel enclosures 511, respectively.

A washer 517 may sleeve the support base 310, and the washer 517 is matched with the wheel enclosures 511 to provide a fastening effect to avoid or reduce wobbling of the functional component 300 during use. For example, in the illustrated embodiments, with reference to FIGs. 11A-13B, the support base 310 may be inserted into the rotating wheel 510, and in the case where the support base 310 is sleeved with a washer 517, when the support base 310 is inserted into the rotating wheel 510, the washer 517 fits closely with the wheel enclosures 510 of the rotating wheel 510, so as to try to ensure that the support base 310 does not wobble with respect to the rotating wheel 510.

One or more shaft pins (two shaft pins in the embodiment shown in FIG. 11A) may be arranged on an upper end surface of the rotating shaft 515. The shaft pins may be coupled to the support base 310 that passes through the washer 517. When the motor 730 drives the rotating shaft 515 to rotate, the shaft pins on the rotating shaft 515 rotate correspondingly, and then drive the support base 310 to rotate. In one embodiment, the shaft pins may be eccentrically configured to drive the support base 310 to rotate.

The rotating shaft 515 and the rotating wheel 510 may be provided with a stop mechanism to limit a range of rotation of the rotating shaft 515 with respect to the rotating wheel 510, and then limit a range of rotation of the functional component 300 with respect to the rotating wheel 510. In one embodiment, a convex block 516 may be arranged on a lateral end surface or an outer end surface of the rotating shaft 515, and correspondingly, a stopper 519 may be arranged on the wheel enclosures 511 of the rotating wheel 510 to limit a deflection range of the functional component 300 by matching the convex block 516 with the stopper 519.

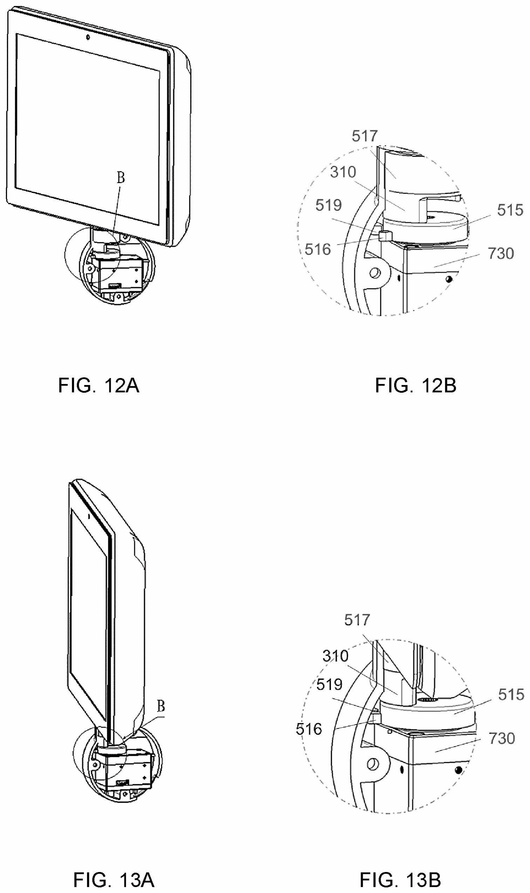

As shown in FIGs. 12A and 12B, it is illustrated that the convex block 516 on the rotating shaft 515 has not yet been in contact with the stopper 519 on the wheel enclosures 511, so that the rotating shaft 515 can continue to rotate, for example, continue to rotate in a clockwise direction. When the rotating shaft 515 continues to rotate in the clockwise direction to a position shown in FIGs. 13A and 13B, the convex block 516 on the rotating shaft 515 is in contact with the stopper 519 on the wheel enclosures 511, and the stopper 519 prevents further rotation of the rotating shaft 515 and the convex block 516 in the clockwise direction, thereby limiting a range of deflection of the functional component 300 in the clockwise direction. Similarly, although not shown, the same operating process is used to limit a range of deflection of the functional component 300 in a counterclockwise direction.

The vehicle interior component 1 according to the present application may be provided with a controller, and the controller is configured to control operation of the motors 710, 720 and 730, and then control the movement of the functional component 300 among the storage position, the intermediate position and the service position, and control the deflection movement of the functional component 300 in the service position.

An operating command may be sent to the controller via a key, a touch screen, or voice. For example, when a key arranged on the instrument panel IP or the floor console FC is pressed, the controller controls the motor 710 to operate so as to drive the functional component 300 to start moving from the storage position to the intermediate position, and meanwhile, in response to the functional component 300 moving from the storage position to the intermediate position, the cover plate is allowed to move from the closed position to the open position, thereby allowing the functional component 300 to protrude from the compartment 110 of the base 100, and then moves to the intermediate position. Thereafter, the controller drives the motor 720 to allow the rotating wheel 510 to rotate with respect to the support arm 400 about an axis extending in the transverse direction, such that the functional component 300 moves to the service position. The above process may be completed with a key at a time, or may be completed with multiple keys for multiple times.

After the functional component 300 is in the service position, a command for allowing the functional component 300 to be deflected may be sent to the controller via another key, touch screen, or voice to meet a desired orientation of the functional component 300 for use by an occupant in the vehicle.

In the case where the functional component 300 is a touch screen, after the functional component 300 is in the service position, the functional component 300 itself may be used to send an operating command to the controller, as shown in FIG. 2E, such that an occupant in the vehicle can automatically control the movement of the functional component 300 (for example, allow the functional component 300 to be deflected) by entering a command through a user interface on the touch screen.

It should be noted that the present invention (e.g., inventive concept) has been described in the specification of this patent document and/or illustrated in the drawings in accordance with exemplary embodiments; the embodiments of the present invention are proposed by way of example only and are not intended as a limitation on the scope of the present invention as defined by the appended claims. The structure and/or arrangement of the elements of the inventive concept as embodied in the present invention, as described in the specification and/or illustrated in the drawings, is illustrative only. Although exemplary embodiments of the present invention have been described in detail in this patent document, it will be readily understood by those of ordinary skill in the art that equivalents, modifications, variations, and the like of the subject matters of the exemplary embodiments and alternative embodiments are possible and are considered to be within the scope of the present invention as defined by the appended claims; all such subject matters (e.g., modifications, variations, embodiments, combinations and equivalents) are intended to be included within the scope of the present invention as defined by the appended claims.

It should be further noted that various/other modifications, variations, substitutions, equivalents, changes, omissions, and the like may be made in the configuration and/or arrangement of the exemplary embodiments (e.g., in the concepts, designs, structures, devices, forms, assembly, constructions, means, functions, systems, processes/methods, steps, sequences of processes/methods and steps, operation, operating conditions, performance, materials, compositions, combinations, and the like) without departing from the scope of the present invention as defined by the appended claims; all such matters (e.g., modifications, variations, embodiments, combinations and equivalents) are intended to be included within the scope of the present invention as defined by the appended claims. The scope of the present invention is not intended to be limited to the subject matters (e.g., the details, structures, functions, materials, acts, steps, sequences, systems, and results) described in the specification and/or the drawings of this patent document but by the appended claims.

Considering that the claims of this patent document will be appropriately interpreted to cover the full scope of the subject matters of the present invention (e.g., comprising any and all such modifications, variations, embodiments, combinations and equivalents); it should be understood that the terms used in this patent document are for the purpose of providing a description of the subject matters of the exemplary embodiments, and is not intended as a limitation on the scope of the present invention as defined by the appended claims.

It should be further noted that, according to exemplary embodiments, the present invention may comprise conventional techniques (e.g., techniques implemented and/or integrated in exemplary embodiments, modifications, variations, combinations and equivalents), or may comprise any other applicable techniques (at present and/or in the future), having the ability to perform the functions and processes/operations described in the specification and/or illustrated in the drawings. All such techniques (e.g., techniques implemented in the manner of embodiments, modifications, variations, combinations, and equivalents) are considered to be within the scope of the present invention of this patent document as defined by the appended claims.

## Claims

1. A vehicle interior component (1), comprising:
- a base (100) providing a compartment (110);
- a cover plate (210, 220) configured to move between a closed position for covering the compartment (110) and an open position for exposing the compartment (110); and
- a base plate (430) arranged inside the compartment (110) and capable of moving between a raised position and a lowered position;
wherein the cover plate (210, 220) moves from the closed position to the open position in response to the base plate (430) moving from the lowered position to the raised position,
wherein the vehicle interior component (1) comprises a mechanism (200) configured to move the cover plate (210, 220) from the closed position to the open position in response to the base plate (430) moving from the lowered position to an intermediate position, and remains in the open position in response to the base plate (430) moving from the intermediate position to the raised position, and
wherein the mechanism (200) comprises a guide rod (608) coupled to the cover plate (210, 220), the guide rod (608) being configured to: be coupled with the base plate (430) to push the cover plate (210, 220) to move in response to the movement of the base plate (430); and be separated from the base plate (430) such that the cover plate (210, 220) remains stationary when the base plate (430) moves, and
wherein the mechanism (200) comprises a spring (607) coupled to the guide rod (608), the spring (607) being compressed when the base plate (430) is in the lowered position, and
wherein the spring (607) is released to push the guide rod (608) into motion when the base plate (430) moves from the lowered position to the intermediate position.

2. The vehicle interior component (1) according to Claim 1 wherein the spring (607) is separated from the base plate (430) when the base plate (430) moves from the intermediate position to the raised position.

3. The vehicle interior component (1) according to Claim 2 wherein one end of the guide rod (608) is provided with a rack (6081), and the cover plate (210, 220) is provided with teeth (211), the cover plate (210, 220) being driven to move through engagement of the teeth (211) and the rack (6081) when the guide rod (608) moves.

4. The vehicle interior component (1) according to Claim 1 wherein one end of the spring (607) is arranged on the base (100) and the other end of the spring (607) is coupled to the guide rod (608) through a pressing plate (610), and the base plate (430) acts on the spring (607) through the pressing plate (610).

5. The vehicle interior component (1) according to any of Claims 1 to 4 wherein the cover plate (210, 220) comprises a first cover plate (210) and a second cover plate (220) that are disposed oppositely.

6. The vehicle interior component (1) according to Claim 5 wherein the first cover plate (210) and the second cover plate (220) move synchronously.

7. The vehicle interior component (1) according to any of Claims 1 to 6 wherein the cover plate (210, 220) is pivotably coupled to the base (100) to move between the closed position and the open position with respect to the base (100).

8. The vehicle interior component (1) according to any of Claims 1 to 7 wherein the base plate (430) is driven by a motor (710, 720).

9. The vehicle interior component (1) according to any of Claims 1 to 8 wherein the vehicle interior component (1) comprises a locking mechanism configured to lock the base plate (430) to the base (100) when the base plate (430) is in the lowered position.

10. The vehicle interior component (1) according to any of Claims 1 to 9 wherein the vehicle interior component (1) comprises a functional component (300) coupled to the base plate (430), wherein the functional component (300) is stored in the compartment (110) when the base plate (430) is in the lowered position; the functional component (300) protrudes from the compartment (110) when the base plate (430) is in the raised position.

11. The vehicle interior component (1) according to Claim 10 wherein the functional component (300) comprises a display screen and/or a vanity mirror.

12. A vehicle (V), comprising the vehicle interior component (1) according to any of the preceding Claims.

## Patentansprüche

1. Ein Fahrzeuginnenteil (1), umfassend:
- eine Basis (100), die ein Fach (110) bereitstellt;
- eine Abdeckplatte (210, 220), die so ausgebildet ist, dass sie sich zwischen einer geschlossenen Position zum Abdecken des Fachs (110) und einer offenen Position zum Freilegen des Fachs (110) bewegen kann; und
- eine Grundplatte (430), die innerhalb des Fachs (110) angeordnet ist und sich zwischen einer angehobenen Position und einer abgesenkten Position bewegen kann;
wobei sich die Abdeckplatte (210, 220) von der geschlossenen Position in die offene Position bewegt als Reaktion darauf, dass sich die Grundplatte (430) von der abgesenkten Position in die angehobene Position bewegt,
wobei das Fahrzeuginnenteil (1) einen Mechanismus (200) umfasst, der dazu ausgebildet ist, die Abdeckplatte (210, 220) von der geschlossenen Position in die offene Position zu bewegen als Reaktion darauf, dass sich die Grundplatte (430) von der abgesenkten Position in eine Zwischenposition bewegt, und in der offenen Position verbleibt als Reaktion darauf, dass sich die Grundplatte (430) von der Zwischenposition in die angehobene Position bewegt, und
wobei der Mechanismus (200) eine mit der Abdeckplatte (210, 220) gekoppelte Führungsstange (608) umfasst, wobei die Führungsstange (608) dazu ausgebildet ist: mit der Grundplatte (430) gekoppelt zu werden, um die Abdeckplatte (210, 220) als Reaktion auf die Bewegung der Grundplatte (430) zum Bewegen zu drücken; und von der Grundplatte (430) getrennt zu werden, sodass die Abdeckplatte (210, 220) unbeweglich bleibt, wenn sich die Grundplatte (430) bewegt, und
wobei der Mechanismus (200) eine mit der Führungsstange (608) gekoppelte Feder (607) umfasst, wobei die Feder (607) komprimiert ist, wenn sich die Grundplatte (430) in der abgesenkten Position befindet, und
wobei die Feder (607) freigegeben wird, um die Führungsstange (608) in Bewegung zu versetzen, wenn sich die Grundplatte (430) von der abgesenkten Position in die Zwischenposition bewegt.

2. Fahrzeuginnenteil (1) nach Anspruch 1,
wobei die Feder (607) von der Grundplatte (430) getrennt wird, wenn sich die Grundplatte (430) von der Zwischenposition in die angehobene Position bewegt.

3. Fahrzeuginnenteil (1) nach Anspruch 2,
wobei ein Ende der Führungsstange (608) mit einer Zahnstange (6081) versehen ist und die Abdeckplatte (210, 220) mit Zähnen (211) versehen ist, wobei die Abdeckplatte (210, 220) durch den Eingriff der Zähne (211) und der Zahnstange (6081) zur Bewegung angetrieben wird, wenn sich die Führungsstange (608) bewegt.

4. Fahrzeuginnenteil (1) nach Anspruch 1,
wobei ein Ende der Feder (607) an der Basis (100) angeordnet ist und das andere Ende der Feder (607) über eine Druckplatte (610) mit der Führungsstange (608) gekoppelt ist, und wobei die Grundplatte (430) über die Druckplatte (610) auf die Feder (607) einwirkt.

5. Fahrzeuginnenteil (1) nach einem der Ansprüche 1 bis 4,
wobei die Abdeckplatte (210, 220) eine erste Abdeckplatte (210) und eine zweite Abdeckplatte (220) umfasst, die einander gegenüberliegend angeordnet sind.

6. Fahrzeuginnenteil (1) nach Anspruch 5,
wobei sich die erste Abdeckplatte (210) und die zweite Abdeckplatte (220) synchron bewegen.

7. Fahrzeuginnenteil (1) nach einem der Ansprüche 1 bis 6,
wobei die Abdeckplatte (210, 220) schwenkbar mit der Basis (100) gekoppelt ist, um sich relativ zur Basis (100) zwischen der geschlossenen Position und der offenen Position zu bewegen.

8. Fahrzeuginnenteil (1) nach einem der Ansprüche 1 bis 7,
wobei die Grundplatte (430) von einem Motor (710, 720) angetrieben wird.

9. Fahrzeuginnenteil (1) nach einem der Ansprüche 1 bis 8,
wobei das Fahrzeuginnenteil (1) einen Verriegelungsmechanismus umfasst, der dazu ausgebildet ist, die Grundplatte (430) an der Basis (100) zu verriegeln, wenn sich die Grundplatte (430) in der abgesenkten Position befindet.

10. Fahrzeuginnenteil (1) nach einem der Ansprüche 1 bis 9,
wobei das Fahrzeuginnenteil (1) eine mit der Grundplatte (430) gekoppelte Funktionskomponente (300) umfasst, wobei die Funktionskomponente (300) im Fach (110) aufgenommen ist, wenn sich die Grundplatte (430) in der abgesenkten Position befindet; und wobei die Funktionskomponente (300) aus dem Fach (110) hervorsteht, wenn sich die Grundplatte (430) in der angehobenen Position befindet.

11. Fahrzeuginnenteil (1) nach Anspruch 10,
wobei die Funktionskomponente (300) einen Bildschirm und/oder einen Kosmetikspiegel umfasst.

12. Fahrzeug (V), das das Fahrzeuginnenteil (1) nach einem der vorstehenden Ansprüche umfasst.

## Revendications

1. Composant intérieur de véhicule (1), comprenant :
- une base (100) formant un compartiment (110) ;
- une plaque de recouvrement (210, 220) configurée pour se déplacer entre une position fermée destinée à recouvrir le compartiment (110), et une position ouverte destinée à exposer le compartiment (110) ; et
- une plaque de base (430) disposée à l'intérieur du compartiment (110) et capable de se déplacer entre une position relevée et une position abaissée ;
dans lequel la plaque de recouvrement (210, 220) se déplace de la position fermée à la position ouverte en réponse au déplacement de la plaque de base (430) de la position abaissée à la position relevée,
dans lequel le composant intérieur de véhicule (1) comprend un mécanisme (200) configuré pour déplacer la plaque de recouvrement (210, 220) de la position fermée à la position ouverte en réponse au déplacement de la plaque de base (430) de la position abaissée vers une position intermédiaire, et pour maintenir la plaque de recouvrement dans la position ouverte en réponse au déplacement de la plaque de base (430) de la position intermédiaire vers la position relevée, et
dans lequel le mécanisme (200) comprend une tige de guidage (608) couplée à la plaque de recouvrement (210, 220), la tige de guidage (608) étant configurée de manière à : être couplée à la plaque de base (430) afin de pousser la plaque de recouvrement (210, 220) en déplacement en réponse au déplacement de la plaque de base (430) ; et être séparée de la plaque de base (430) de telle sorte que la plaque de recouvrement (210, 220) demeure immobile lorsque la plaque de base (430) se déplace, et
dans lequel le mécanisme (200) comprend un ressort (607) couplé à la tige de guidage (608), le ressort (607) étant comprimé lorsque la plaque de base (430) se trouve en position abaissée, et
dans lequel le ressort (607) est libéré pour mettre la tige de guidage (608) en mouvement lorsque la plaque de base (430) se déplace de la position abaissée vers la position intermédiaire.

2. Composant intérieur de véhicule (1) selon la revendication 1,
dans lequel le ressort (607) est séparé de la plaque de base (430) lorsque la plaque de base (430) se déplace de la position intermédiaire vers la position relevée.

3. Composant intérieur de véhicule (1) selon la revendication 2,
dans lequel une extrémité de la tige de guidage (608) est pourvue d'une crémaillère (6081), et la plaque de recouvrement (210, 220) est pourvue de dents (211), la plaque de recouvrement (210, 220) étant entraînée en déplacement par l'engrènement des dents (211) et de la crémaillère (6081) lorsque la tige de guidage (608) se déplace.

4. Composant intérieur de véhicule (1) selon la revendication 1,
dans lequel une extrémité du ressort (607) est disposée sur la base (100) et l'autre extrémité du ressort (607) est couplée à la tige de guidage (608) par l'intermédiaire d'une plaque de pression (610), et la plaque de base (430) agit sur le ressort (607) par l'intermédiaire de la plaque de pression (610).

5. Composant intérieur de véhicule (1) selon l'une quelconque des revendications 1 à 4,
dans lequel les plaques de recouvrement (210, 220) comprennent une première plaque de recouvrement (210) et une deuxième plaque de recouvrement (220) disposées de manière opposée.

6. Composant intérieur de véhicule (1) selon la revendication 5,
dans lequel la première plaque de recouvrement (210) et la deuxième plaque de recouvrement (220) se déplacent de de façon synchrone.

7. Composant intérieur de véhicule (1) selon l'une quelconque des revendications 1 à 6,
dans lequel la plaque de recouvrement (210, 220) est couplée de manière pivotante à la base (100) afin de se déplacer entre la position fermée et la position ouverte par rapport à la base (100).

8. Composant intérieur de véhicule (1) selon l'une quelconque des revendications 1 à 7,
dans lequel la plaque de base (430) est entraînée par un moteur (710, 720).

9. Composant intérieur de véhicule (1) selon l'une quelconque des revendications 1 à 8,
dans lequel le composant intérieur de véhicule (1) comprend un mécanisme de verrouillage configuré pour verrouiller la plaque de base (430) à la base (100) lorsque la plaque de base (430) se trouve en position abaissée.

10. Composant intérieur de véhicule (1) selon l'une quelconque des revendications 1 à 9,
dans lequel le composant intérieur de véhicule (1) comprend un composant fonctionnel (300) couplé à la plaque de base (430), le composant fonctionnel (300) étant rangé dans le compartiment (110) lorsque la plaque de base (430) est en position abaissée ; le composant fonctionnel (300) faisant saillie hors du compartiment (110) lorsque la plaque de base (430) est en position relevée.

11. Composant intérieur de véhicule (1) selon la revendication 10,
dans lequel le composant fonctionnel (300) comprend un écran d'affichage et/ou un miroir de courtoisie.

12. Véhicule (V) comprenant le composant intérieur de véhicule (1) selon l'une quelconque des revendications précédentes.
